# EUROPEAN PATENT SPECIFICATION

(11) **EP 3 666 624 B1**
(45) Date of publication and mention of the grant of the patent: **15.09.2021**
(21) Application number: 19213784.2
(22) Date of filing: 05.12.2019
(51) Int. Cl.: B62D 1/184

(54) **STEERING COLUMN DEVICE**
LENKSÄULENVORRICHTUNG
DISPOSITIF DE COLONNE DE DIRECTION

(30) Priority: 11.12.2018 JP 2018231311
(43) Date of publication of application: 17.06.2020
(73) Proprietor: Fuji Kiko Co., Ltd., Shizuoka 431-0431 (JP)
(72) Inventor: SAWAMURA, Koji, Kosai-shi, Shizuoka 431-0431 (JP)
(74) Representative: Grünecker Patent- und Rechtsanwälte PartG mbB

(56) References cited:
- EP-A1- 3 225 502
- KR-B1- 101 888 002

## Description

### Technical Field

The present invention relates to a steering column device.

### Background Art

A tilt steering column device in which a steering column is provided to be swingable in an up-down direction relative to a vehicle body attachment bracket on the vehicle body side is provided with a lock mechanism configured to lock the steering column with a tilt position adjusted (See Japanese Patent Application Publication No. 2017-19340). The lock mechanism is set to a locked state by bringing a lock member close to lock teeth in the vehicle body attachment bracket and causing the lock member to mesh with the lock teeth by an operation on an operation lever. In unlocking, an unlocking spring formed integrally with the lock member moves the lock member away from the lock teeth. Furthermore, document EP 3 225 502 A1 discloses the preamble of the independent claim.

### Summary

In the configuration in which the unlocking spring moves the lock member away from the lock teeth in the unlocking, the unlocking operation may be insufficient in some cases.

An object of the present invention is to more surely perform unlocking in a lock mechanism.

A steering column device of the present invention includes: a vehicle body attachment bracket attached to a vehicle body and including paired side walls disposed away from each other in a vehicle width direction; a steering column movably supported between the paired side walls of the vehicle body attachment bracket and including a steering shaft; and a lock mechanism configured to lock the steering column such that movement of the steering column relative to the vehicle body attachment bracket is restricted. The lock mechanism includes: a shaft portion penetrating the paired side walls of the vehicle body attachment bracket and the steering column in the vehicle width direction; vehicle body side lock teeth provided on an outer side of the side walls in the vehicle width direction; movable side lock teeth configured to mesh with the vehicle body side lock teeth by moving toward the vehicle body side lock teeth in an axial direction of the shaft portion; a fixed cam located on the shaft portion, on the outer side of the side walls in the vehicle width direction where the vehicle body side lock teeth is provided; a movable cam having a movable mountain portion and configured to cause the paired side walls to hold the steering column therebetween on the shaft portion by bringing the movable mountain portion into contact with a fixed mountain portion of the fixed cam and pressing the movable mountain portion against the fixed mountain portion in the axial direction; an operation lever allowing a turning operation of the movable cam; an unlocking fixed cam provided integrally with the fixed cam on an outer peripheral side of the fixed cam; and an unlocking movable cam having an unlocking movable mountain portion and configured to move the movable side lock teeth away from the vehicle body side lock teeth by bringing the unlocking movable mountain portion into contact with an unlocking fixed mountain portion of the unlocking fixed cam when a contact state between the fixed mountain portion and the movable mountain portion is released by the turning operation of the operation lever.

According to the present invention, since the mountain portions of the unlocking movable cam and the unlocking fixed cam come into contact with each other and the movable lock teeth moves away from the vehicle body side lock teeth in the unlocking by the operation on the operation lever, the unlocking is more surely performed.

### Brief Description of Drawings

Fig. 1 is a perspective view illustrating an overall configuration of a steering column device according to an embodiment.
Fig. 2 is an exploded perspective view illustrating a lock mechanism of the steering column device.
Fig. 3 is a cross-sectional view along the line A-A in Fig. 1.
Fig. 4A is a perspective view illustrating a state where a movable mountain portion is in contact with a fixed mountain portion in a locked state.
Fig. 4B is a perspective view illustrating a positional relationship between an unlocking movable cam and an unlocking fixed cam in the locked state.
Fig. 5A is a perspective view illustrating a state where the movable mountain portion and the fixed mountain portion are out of contact in an unlocked state.
Fig. 5B is a perspective view illustrating a state where an unlocking movable mountain portion and an unlocking fixed mountain portion are in contact with each other in the unlocked state.

### Description of Embodiments

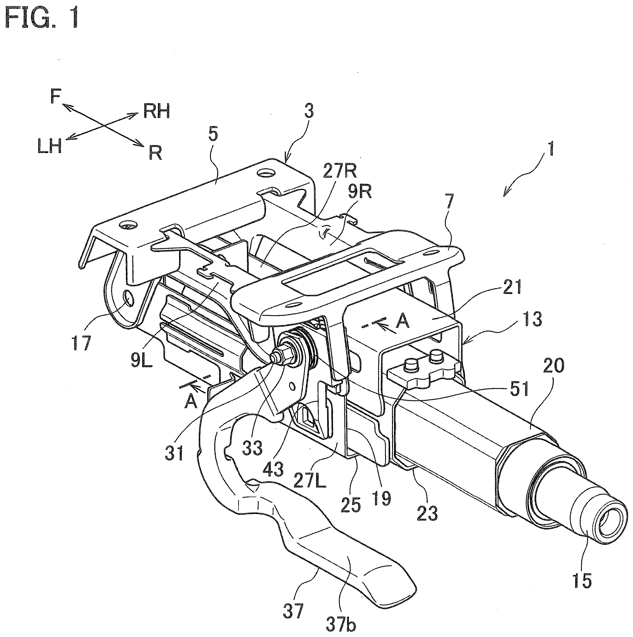

An embodiment of the present invention is described below based on the drawings. Note that "front-rear direction" in the following description corresponds to a front-rear direction of a vehicle body and a "left-right direction" corresponds to a left-right direction (vehicle width direction) of the vehicle body. In Fig. 1, the front side and the rear side in the "front-rear direction" are denoted by F and R, respectively, and the left side and the right side in the "left-right direction" are denoted by LH and RH, respectively.

Fig. 1 is a perspective view of a steering column device 1 and a vehicle body attachment bracket 3 is attached to a not-illustrated vehicle body. The vehicle body attachment bracket 3 includes a front attachment portion 5 and a rear attachment portion 7 which are provided, respectively, on both sides, in the front-rear direction, of an upper portion of the vehicle body attachment bracket 3 and which are attached to the vehicle body. Paired left and right side walls 9L, 9R extend downward from both of left and right sides of the front attachment portion 5 and the rear attachment portion 7. A steering column 13 is attached between the paired side walls 9L, 9R to be swingable in an up-down direction. The steering column 13 includes a steering shaft 15 and a not-illustrated steering wheel is attached an end portion of the steering shaft 15 on the rear side of the vehicle body.

A front end portion of the steering column 13 swings in the up-down direction relative to the vehicle body attachment bracket 3 about a swing support shaft 17 extending in the left-right direction. The steering column 13 includes a lower jacket 19, an upper jacket 20, and an intermediate jacket 23. The lower jacket 19 has a substantially U shape open on the upper side, the intermediate jacket 23 includes a substantially inverted U shaped distance bracket 21 in an upper portion and has a substantially rectangular tube shape, and the upper jacket 20 has a substantially rectangular tube shape. The upper jacket 20 is supported inside the intermediate jacket 23.

The distance bracket 21 is fixed to the intermediate jacket 23 by welding to cover the intermediate jacket 23 from above. The lower jacket 19 covers the intermediate jacket 23 from below and also covers a lower portion of the distance bracket 21. In this state, the upper jacket 20 and the intermediate jacket 23 including the distance bracket 21 are movable in the front-rear direction relative to the lower jacket 19. A telescopic mechanism in which the steering shaft 15 including the steering wheel moves forward and backward is thereby formed.

The lower jacket 19 includes a bottom wall 25 and paired left and right column side walls 27L, 27R standing upright from left and right sides of the bottom wall 25. The side walls 9L, 9R of the vehicle body attachment bracket 3 are disposed outside the column side walls 27L, 27R, respectively, in the left-right direction such that the column side walls 27L, 27R are provided between the side walls 9L, 9R. In this state, the steering column 13 including the lower jacket 19, the upper jacket 20, and the intermediate jacket 23 swings upward and downward relative to the vehicle body attachment bracket 3 together with the steering shaft 15.

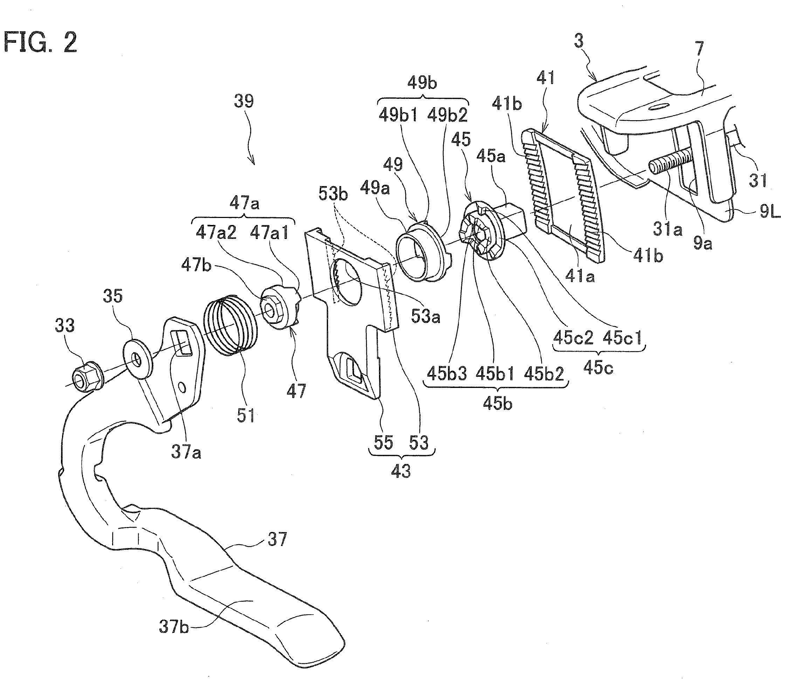

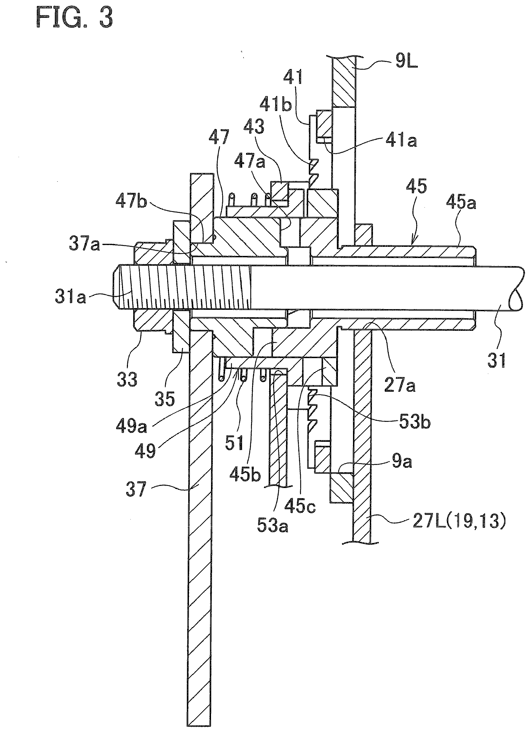

A tilt shaft guide hole 9a elongating in the up-down direction is formed in a rear portion of each of the side walls 9L, 9R of the vehicle body attachment bracket 3 (see Fig. 2). The tilt shaft guide hole 9a has a shape of an arc about the swing support shaft 17. A tilt shaft insertion hole 27a is formed in each of the column side walls 27L, 27R to correspond to the tilt shaft guide hole 9a (see Fig. 3). A tilt shaft 31 which is a shaft portion is inserted into the tilt shaft guide holes 9a and the tilt shaft insertion holes 27a from right to left to penetrate the tilt shaft guide holes 9a and the tilt shaft insertion holes 27a. The tilt shaft insertion holes 27a are substantially square holes and are not long holes like the tilt shaft guide holes 9a.

A not-illustrated bolt head is formed in a right end portion of the tilt shaft 31 and a male thread 31a is formed in a left end portion of the tilt shaft 31. As illustrated in Fig. 3, a portion of the tilt shaft 31 in which the male thread 31a is formed penetrates the column side wall 27L and an operation lever 37 to protrude to the left and a nut 33 is fastened to the male thread 31a with a washer 35 provided between the nut 33 and the operation lever 37. The operation lever 37 is turnable (rotatable) about the axis of the tilt shaft 31. In locking of a lock mechanism 39 to be described later, a turning operation of the operation lever 37 causes the side walls 9L, 9R to hold the paired column side walls 27L, 27R therebetween (between the side walls 9L, 9R) from both of left and right sides and fix the column side walls 27L, 27R.

Next, the lock mechanism 39 is described.

The lock mechanism 39 includes a lock piece 41 fixed to the side wall 9L of the vehicle body attachment bracket 3. The lock piece 41 has a rectangular plate shape which is slightly longer in the up-down direction. The lock piece 41 is fixed outside the side wall 9L in the vehicle width direction and an opening portion 41a elongating in the up-down direction is formed at a position corresponding to the tilt shaft guide hole 9a in the fixed state. Lock teeth 41b which are vehicle body side lock teeth are formed in front of and behind the opening portion 41a on a side surface of the lock piece 41 opposite to the side wall 9L. Multiple lock teeth 41b are formed in the up-down direction and form the vehicle body side lock teeth. A dimension of the opening portion 41a in the front-rear direction is sufficiently larger than the dimension of the tilt shaft guide hole 9a in the front-rear direction.

The lock mechanism 39 further includes a lock tooth unit 43 configured to mesh with the lock teeth 41b, a fixed cam member 45, a movable cam member 47, an unlocking movable cam member 49, and a pressing spring 51 which is a pressing member.

The lock tooth unit 43 includes an upper section 53 which has a substantially cuboid shape elongating in the front-rear direction and a lower section 55 which extends downward from a center portion of the upper section 53 in the front-rear direction and which has a substantially cuboid shape elongating in the up-down direction. A circular hole 53a is formed at the center of the upper section 53 in the front-rear direction. The diameter of the circular hole 53a is sufficiently larger than the diameter of the tilt shaft 31.

Tooth unit side lock teeth 53b which are movable side lock teeth are formed in front and rear portions of the upper section 53. Multiple tooth unit side lock teeth 53b are formed in the up-down direction and mesh with the aforementioned lock teeth 41b to set the lock mechanism 39 to a locked state. The length, in the up-down direction, of a portion of the upper section 53 in which the tooth unit side lock teeth 53b are formed is smaller than the length, in the up-down direction, of a portion of the lock piece 41 in which the lock teeth 41b are formed.

The fixed cam member 45 includes a boss portion 45a having a cuboid shape elongating in the left-right direction. An annular fixed cam 45b is formed in a left end portion of the boss portion 45a. The fixed cam 45b includes a fixed mountain portion 45b1 protruding to the left and a fixed valley portion 45b2. A stopper protrusion 45b3 protruding to the left further than the fixed mountain portion 45b1 is formed on the opposite side of the fixed mountain portion 45b1 to the fixed valley portion 45b2.

In the fixed cam member 45, an unlocking fixed cam 45c is formed integrally with the fixed cam 45b on the outer peripheral side thereof. The unlocking fixed cam 45c includes an unlocking fixed mountain portion 45c1 protruding to the left and an unlocking fixed valley portion 45c2. The fixed mountain portion 45b1 and the unlocking fixed mountain portion 45c1 are provided to be shifted from each other in the circumferential direction and to be adjacent to each other in the circumferential direction.

As illustrated in Fig. 3, the boss portion 45a is inserted into the tilt shaft guide hole 9a of the side wall 9L to be movable in the up-down direction. The width dimension of the boss portion 45a in the front-rear direction is slightly smaller than the width dimension of the tilt shaft guide hole 9a in the front-rear direction.

Right side surfaces of the unlocking fixed cam 45c and the fixed cam 45b come into contact with the side wall 9L of the vehicle body attachment bracket 3 from the left side in the state where the boss portion 45a is inserted in the tilt shaft guide hole 9a. In this case, the unlocking fixed cam 45c and the fixed cam 45b are inside the opening portion 41a of the lock piece 41. In other words, the outer diameter of the unlocking fixed cam 45c is smaller than the dimension of the opening portion 41a in the front-rear direction.

As illustrated in Fig. 3, the boss portion 45a is inserted into the tilt shaft insertion hole 27a of the column side wall 27L. The cross-sectional shape of the boss portion 45a is a substantially square shape and the tilt shaft insertion hole 27a has a substantially square shape which corresponds to and is slightly smaller than the substantially square shape of the boss portion 45a. The boss portion 45a is fitted to the tilt shaft insertion hole 27a. Accordingly, the fixed cam member 45 including the boss portion 45a is restricted from rotating relative to the tilt shaft insertion hole 27a. When the fixed cam member 45 moves inside the tilt shaft guide hole 9a in the up-down direction in this state, the column side wall 27L (lower jacket 19) swings up and down as the steering column 13.

A not-illustrated bush with a substantially square cross-sectional shape similar to the boss portion 45a is inserted into the tilt shaft guide hole 9a of the side wall 9R and the tilt shaft insertion hole 27a of the column side wall 27R. In this case, the bush is fitted to the tilt shaft insertion hole 27a and is movable in the up-down direction relative to the tilt shaft guide hole 9a. The tilt shaft 31 is inserted into the bush. The bush includes a flange in a right end portion and the flange is located on the right side of the side wall 9R. Accordingly, the left and right side walls 9L, 9R of the vehicle body attachment bracket 3 are disposed between a set of the unlocking fixed cam 45c and the fixed cam 45b and the flange of the bush.

The movable cam member 47 is at a position facing the fixed cam 45b in an axial direction (left-right direction). A movable cam 47a is formed on the side of the movable cam member 47 facing the fixed cam 45b. The movable cam 47a includes a movable mountain portion 47a1 protruding to the right and a movable valley portion 47a2. In the movable cam member 47, a fitting portion 47b is formed on the opposite side of the movable cam 47a to the fixed cam 45b. The fitting portion 47b is fitted and fixed to a fitting hole 37a of the operation lever 37.

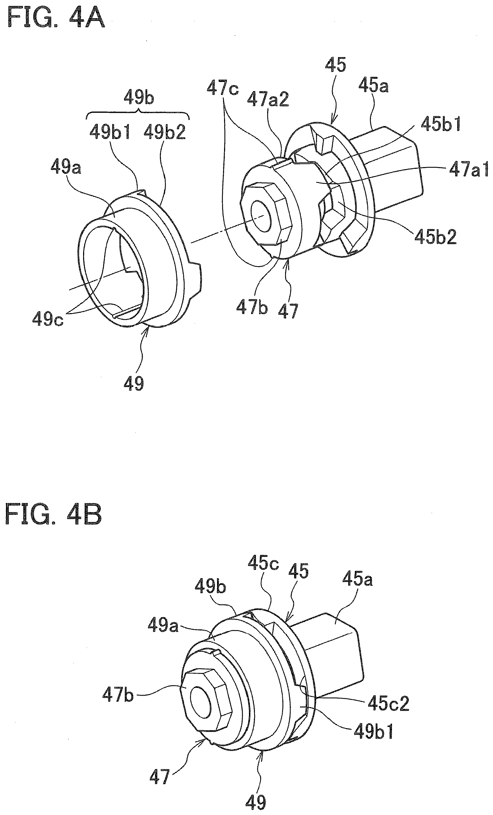

The movable cam member 47 presses the fixed cam member 45 to the right in the state where the operation lever 37 is operated and turned together with the movable cam member 47 and the movable mountain portion 47a1 is thereby made to ride on the fixed mountain portion 45b1 and brought into contact therewith in the axial direction. The right side surfaces of the unlocking fixed cam 45c and the fixed cam 45b thereby press the side wall 9L to the right. Fig. 4A illustrates the state where the movable mountain portion 47a1 rides on the fixed mountain portion 45b1 and is in contact therewith in the axial direction. Fig. 4B illustrates a state where the unlocking movable cam member 49 to be described later is attached to the fixed cam member 45 and the movable cam member 47 in the state of Fig. 4A.

In the state where the movable mountain portion 47a1 is in contact with the fixed mountain portion 45b1 in the axial direction, the left and right side walls 9L, 9R of the vehicle body attachment bracket 3 are held between the set of unlocking fixed cam 45c and the fixed cam 45b and the aforementioned flange of the bush. The held left and right side walls 9L, 9R press the left and right column side walls 27L, 27R of the lower jacket 19 located inside the side walls 9L, 9R. The lower jacket 19 is thereby locked and fixed by the vehicle body attachment bracket 3. In this case, the tooth unit side lock teeth 53b of the lock tooth unit 43 are pushed by the pressing spring 51 and mesh with the lock teeth 41b of the lock piece 41.

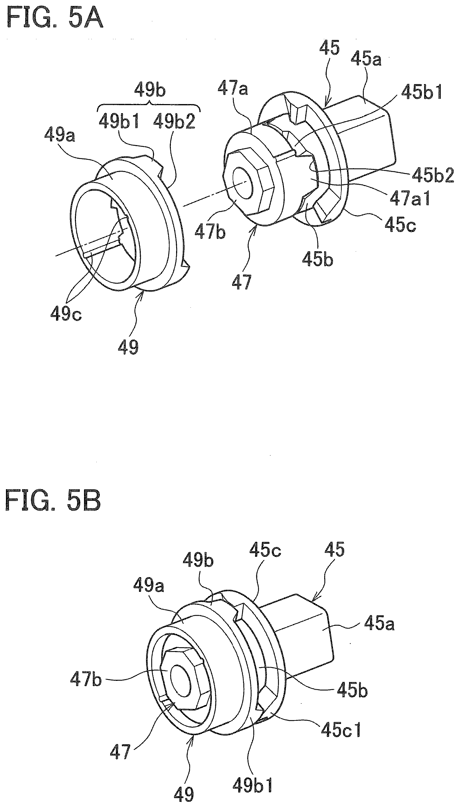

The action of pressing the fixed cam member 45 to the right is canceled in the state where the operation lever 37 is operated and turned together with the movable cam member 47 and the movable mountain portion 47a1 is thereby made to face the fixed valley portion 45b2 as illustrated in Fig. 5A. Accordingly, the lower jacket 19 is no longer pressed by the side walls 9L, 9R of the vehicle body attachment bracket 3 and the steering column 13 is movable in the up-down direction relative to the vehicle body attachment bracket 3. In this state, a user can adjust an up-down swinging position of the steering column 13 including the lower jacket 19.

In the unlocking movable cam member 49, an unlocking movable cam 49b is formed in a right end portion of a cylinder portion 49a. The unlocking movable cam 49b includes an unlocking movable mountain portion 49b1 protruding to the right and an unlocking movable valley portion 49b2. As illustrated in Fig. 3, the movable cam member 47 is inserted in the cylinder portion 49a and the cylinder portion 49a is inserted in the circular hole 53a of the lock tooth unit 43 to be capable of turning and moving in the axial direction relative to the circular hole 53a. In the state where the cylinder portion 49a is inserted in the circular hole 53a, a left side surface of the unlocking movable cam 49b faces a right side surface of the lock tooth unit 43.

As illustrated in Fig. 4A, grooves 49c extending in the axial direction are formed on an inner surface of the cylinder portion 49a. Meanwhile, protrusions 47c extending in the axial direction are formed on an outer peripheral surface of the movable cam member 47. Multiple grooves 49c and multiple protrusions 47c (in this case, two grooves and two protrusions provided at positions 180 degrees away from one another) are formed in the circumferential direction. A portion of the cylinder portion 49a in which the grooves 49c are formed is longer than a portion of the movable cam member 47 in which the protrusions 47c are formed, in the axial direction.

When the movable cam member 47 is inserted into the cylinder portion 49a, the protrusions 47c are inserted into the grooves 49c to be movable in the axial direction. The movable cam member 47 and the unlocking movable cam member 49 are thus movable relative to each other in the axial direction but are restricted from turning relative to each other about the tilt shaft 31 by the protrusions 47c and the grooves 49c. In other words, the protrusions 47c and the grooves 49c form a turning restriction portion configured to restrict turning of the movable cam member 47 and the unlocking movable cam member 49 relative to each other. Note that the protrusions 47c and the grooves 49c are omitted in Fig. 2.

In Figs. 4A and 4B which correspond to the state where the lock mechanism 39 is locked, the unlocking movable mountain portion 49b1 is at a position facing the unlocking fixed valley portion 45c2 as illustrated in Fig. 4B. When the operation lever 37 is operated and turned and the movable cam member 47 is turned in this state, the state where the movable mountain portion 47a1 is in contact with the fixed mountain portion 45b1 (Fig. 4A) is released. In this case, as illustrated in Fig. 5A, the movable mountain portion 47a1 is at a position facing the fixed valley portion 45b2.

Turning of the movable cam member 47 causes the unlocking movable cam member 49 to turn integrally with the movable cam member 47. The unlocking movable mountain portion 49b1 is thus moved from the position facing the unlocking fixed valley portion 45c2 as in Fig. 4B to the position facing the unlocking fixed mountain portion 45c1 as in Fig. 5B and comes into contact with the unlocking fixed mountain portion 45c1 in the axial direction. The unlocking movable cam member 49 is thereby pressed to the left by the unlocking fixed cam 45c (fixed cam member 45) and is moved to the left in the axial direction away from the unlocking fixed cam 45c.

The aforementioned movement of the unlocking fixed cam 45c (fixed cam member 45) to the left causes the lock tooth unit 43 to be pressed and moved in a direction away from the lock piece 41 against pressing force of the pressing spring 51. The tooth unit side lock teeth 53b of the lock tooth unit 43 thereby move away from the lock teeth 41b of the lock piece 41 and the state where the tooth unit side lock teeth 53b and the lock teeth 41b are in contact with one another is avoided.

Next, operations and effects of the embodiment are described.

The embodiment includes: the vehicle body attachment bracket 3 attached to the vehicle body and including the paired side walls 9L, 9R disposed away from each other in the vehicle width direction; the steering column 13 movably supported between the side walls 9L, 9R and including the steering shaft 15; and the lock mechanism 39 configured to lock the steering column 13 such that the movement of the steering column 13 relative to the vehicle body attachment bracket 3 is restricted.

The lock mechanism 39 includes: the tilt shaft 31 penetrating the side walls 9L, 9R of the vehicle body attachment bracket 3 and the steering column 13 in the vehicle width direction; the vehicle body side lock teeth 41b provided on the outer side of the side wall 9L in the vehicle width direction; and the tooth unit side lock teeth 53b configured to mesh with the lock teeth 41b by moving toward the lock teeth 41b in the axial direction of the tilt shaft 31.

The lock mechanism 39 includes the fixed cam 45b located on the tilt shaft 31, on the outer side of the side wall 9L in the vehicle width direction where the lock teeth 41b is provided; the movable cam 47a having the movable mountain portion 47a1 and configured to cause the side walls 9L, 9R to hold the steering column 13 therebetween on the tilt shaft 31 by bringing the movable mountain portion 47a1 into contact with the fixed mountain portion 45b1 of the fixed cam 45b and pressing the movable mountain portion 47a1 against the fixed mountain portion 45b1 in the axial direction; and the operation lever 37 allowing the turning operation of the movable cam 47a.

The lock mechanism 39 includes: the unlocking fixed cam 45c provided integrally with the fixed cam 45b on the outer peripheral side of the fixed cam 45b; and the unlocking movable cam 49b having the unlocking movable mountain portion 49b1 and configured to move the tooth unit side lock teeth 53b away from the lock teeth 41b by bringing the unlocking movable mountain portion 49b1 into contact with the unlocking fixed mountain portion 45c1 of the unlocking fixed cam 45c when the contact state between the fixed mountain portion 45b1 and the movable mountain portion 47a1 is released by the turning operation of the operation lever 37.

In the steering column device 1, the left and right side walls 9L, 9R of the vehicle body attachment bracket 3 hold the steering column 13 therebetween from the left and right sides and fix the steering column 13 in the state where the operation portion 37b of the operation lever 37 is operated and turned to be pushed upward and the fixed mountain portion 45b1 and movable mountain portion 47a1 are in contact with each other as in Fig. 4A. In this case, the tooth unit side lock teeth 53b mesh with the lock teeth 41b and the lock mechanism 39 is in the locked state.

When the user is to adjust the position of the steering column 13 in the up-down direction from the locked state of the lock mechanism 39, the user releases the locked state by performing the turning operation of pressing the operation portion 37b in a downward direction which is the opposite to the aforementioned direction. As illustrated in Fig. 5A, the fixed mountain portion 45b1 and the movable mountain portion 47a1 are brought out of contact as in Fig. 5A and the holding fixing state of the steering column 13 by the side walls 9L, 9R of the vehicle body attachment bracket 3 is released. Almost at the same time, the unlocking movable mountain portion 49b1 is moved from the position facing the unlocking fixed valley portion 45c2 of Fig. 4B and is transitioned to the state where the unlocking movable mountain portion 49b1 faces the unlocking fixed mountain portion 45c1 of Fig. 5B and is in contact therewith.

In this case, since the unlocking movable cam 49b is pressed to the left by the unlocking fixed cam 45c, the lock tooth unit 43 is pressed and moved to the left. As a result, the tooth unit side lock teeth 53b move away from the lock teeth 41b of the lock piece 41 and the lock mechanism 39 is set to an unlocked state. The user moves the steering column 13 up or down in the unlocked state and operates and turns the operation portion 37b upward while setting the steering column 13 at the user's desired position. The fixed mountain portion 45b1 and the movable mountain portion 47a1 are thereby brought into contact with each other and are set to the state of Fig. 4A and the lock mechanism 39 is returned to the locked state of Figs. 4A and 4B.

In the unlocked state of the lock mechanism 39, as illustrated in Fig. 5B, the unlocking movable mountain portion 49b1 and the unlocking fixed mountain portion 45c1 are brought into contact with each other in the axial direction and this causes the unlocking movable cam member 49 to move to the left and move the lock tooth unit 43 in the direction away from the lock piece 41. The contact between the tooth unit side lock teeth 53b and the lock teeth 41b is thereby avoided and the unlocking is more surely performed. In this case, it is possible to avoid a situation where, when the steering column 13 is moved up or down, the tooth unit side lock teeth 53b and the lock teeth 41b ride on one another and the lock mechanism 39 cannot be locked.

In the embodiment, the unlocking movable cam member 49 including the unlocking movable cam 49b includes the cylinder portion 49a and the movable cam member 47 including the movable cam 47a is inserted inside the cylinder portion 49a to be movable in the axial direction. The turning restriction portion (grooves 49c and protrusions 47c) configured to restrict the turning of the movable cam member 47 and the unlocking movable cam member 49 relative to each other is provided between the movable cam member 47 and the cylinder portion 49a.

In this case, the unlocking movable cam 49b turns integrally with the movable cam member 47 due to the action of the turning restriction portion when the turning operation of the operation lever 37 is performed. Accordingly, when the movable cam member 47 is to be moved from an unlocked position (Fig. 5A) to a locked position (Fig. 4A), it is possible to cause the unlocking movable cam 49b to turn together with the movable cam member 47 and cause the tooth unit side lock teeth 53b to mesh with the lock teeth 41b. Meanwhile, when the movable cam member 47 is to be moved from the locked position (Fig. 4A) to the unlocked position (Fig. 5A), it is possible to cause the unlocking movable cam 49b to turn together with the movable cam member 47 and cause the tooth unit side lock teeth 53b to move away from the lock teeth 41b.

The embodiment includes the pressing spring 51 configured to press the tooth unit side lock teeth 53b against the lock teeth 41b. Accordingly, it is possible to cause the tooth unit side lock teeth 53b to surely mesh with the lock teeth 41b in the locking and suppress half locking.

Although the embodiment of the present invention has been described above, the embodiment is merely an example described to facilitate the understanding of the present invention and the present invention is not limited to the embodiment.

For example, in aforementioned, as the turning restricting portion, the grooves 49c are formed on the inner surface of the cylinder portion 49a and the protrusions 47c are formed on the outer peripheral surface of the movable cam member 47. However, the configuration may be such that protrusions are formed on the inner surface of the cylinder portion 49a and grooves are formed on the outer peripheral surface of the movable cam member 47.

## Claims

1. A steering column device comprising:
a vehicle body attachment bracket (3) attached to a vehicle body and including paired side walls (9L, 9R) disposed away from each other in a vehicle width direction;
a steering column (13) movably supported between the paired side walls (9L, 9R) of the vehicle body attachment bracket (3) and including a steering shaft (15); and
a lock mechanism (39) configured to lock the steering column (13) such that movement of the steering column (13) relative to the vehicle body attachment bracket (3) is restricted, wherein
the lock mechanism (39) includes:
a shaft portion penetrating the paired side walls (9L, 9R) of the vehicle body attachment bracket (3) and the steering column (13) in the vehicle width direction;
vehicle body side lock teeth (41b) provided on an outer side of the side walls (9L, 9R) in the vehicle width direction;
movable side lock teeth (53b) configured to mesh with the vehicle body side lock teeth (41b) by moving toward the vehicle body side lock teeth (41b) in an axial direction of the shaft portion;
a fixed cam (45b) located on the shaft portion, on the outer side of the side walls (9L, 9R) in the vehicle width direction where the vehicle body side lock teeth (41b) is provided;
a movable cam (47a) having a movable mountain portion (47a1) and configured to cause the paired side walls (9L, 9R) to hold the steering column (13) between the paired side walls (9L, 9R) on the shaft portion by bringing the movable mountain portion (47a1) into contact with a fixed mountain portion (45b1) of the fixed cam (45b) and pressing the movable mountain portion (47a1) against the fixed mountain portion (45b1) in the axial direction;
an operation lever (37) allowing a turning operation of the movable cam (47a); **characterised in that** the lock mechanism (39) further includes
an unlocking fixed cam (45c) provided integrally with the fixed cam (45b) on an outer peripheral side of the fixed cam (45b); and
an unlocking movable cam (49b) having an unlocking movable mountain portion (49b1) and configured to move the movable side lock teeth (53b) away from the vehicle body side lock teeth (41b) by bringing the unlocking movable mountain portion (49b1) into contact with an unlocking fixed mountain portion (45c1) of the unlocking fixed cam (45c) when a contact state between the fixed mountain portion (45b1) and the movable mountain portion (47a1) is released by the turning operation of the operation lever (37).

2. The steering column device according to claim 1, wherein
the unlocking movable cam (49b) includes a cylinder portion (49a),
the movable cam (47a) is inserted inside the cylinder portion (49a) to be movable in the axial direction, and
a turning restriction portion configured to restrict rotation of the movable cam (47a) and the unlocking movable cam (49b) relative to each other is provided between the movable cam (47a) and the cylinder portion (49a).

3. The steering column device according to claim 1 or 2, further comprising a pressing member configured to press the movable side lock teeth (53b) against the vehicle body side lock teeth (41b).

## Patentansprüche

1. Lenksäulen-Vorrichtung (1) die umfasst:
eine Fahrzeugkarosserie-Anbringungshalterung (3), die an einer Fahrzeugkarosserie angebracht ist und paarige Seitenwände (9L, 9R) enthält, die in einer Fahrzeug-Breitenrichtung voneinander entfernt angeordnet sind;
eine Lenksäule (13), die beweglich zwischen den paarigen Seitenwänden (9L, 9R) der Fahrzeugkarosserie-Anbringungshalterung (3) gelagert ist und eine Lenkwelle (15) enthält; sowie
einen Arretiermechanismus (39), der so ausgeführt ist, dass er die Lenksäule (13) so arretiert, dass Bewegung der Lenksäule (13) relativ zu der Fahrzeugkarosserie-Anbringungshalterung (3) eingeschränkt wird, wobei
der Arretiermechanismus (39) enthält:
einen Wellenabschnitt, der sich in der Fahrzeug-Breitenrichtung durch die paarigen Seitenwände (9L, 9R) der Fahrzeugkarosserie-Anbringungshalterung (3) und die Lenksäule (13) hindurch erstreckt;
Seiten-Arretierzähne (41b) der Fahrzeugkarosserie, die an einer Außenseite der Seitenwände (9L, 9R) in der Fahrzeug-Breitenrichtung vorhanden sind;
bewegliche Seiten-Arretierzähne (53b), die so ausgeführt sind, dass sie mit den Seiten-Arretierzähne (41b) der Fahrzeugkarosserie in Eingriff kommen, indem sie sich in einer axialen Richtung des Wellenabschnitts auf die Seiten-Arretierzähne (41b) der Fahrzeugkarosserie zu bewegen;
einen stationären Nocken (45b), der sich an dem Wellenabschnitt an der Außenseite der Seitenwände (9L, 9R) in der Fahrzeug-Breitenrichtung dort befindet, wo die Seiten-Arretierzähne (41b) der Fahrzeugkarosserie vorhanden sind;
einen beweglichen Nocken (47a), der einen beweglichen Erhebungsabschnitt (47a1) aufweist und so ausgeführt ist, dass er die paarigen Seitenwände (9L, 9R) veranlasst, die Lenksäule (13) zwischen den paarigen Seitenwänden (9L, 9R) an dem Wellenabschnitt zu halten, indem er den beweglichen Erhebungsabschnitt (47a1) mit einem stationären Erhebungsabschnitt (45b1) des stationären Nockens (45b) in Kontakt bringt und den beweglichen Erhebungsabschnitt (47a1) in der axialen Richtung an den stationären Erhebungsabschnitt (45b1) drückt;
einen Betätigungshebel (37), der eine Drehbetätigung des beweglichen Nockens (47a) zulässt, **dadurch gekennzeichnet, dass** der Arretiermechanismus (39) des Weiteren enthält:
einen stationären Entriegelungs-Nocken (45c), der integral mit dem stationären Nocken (45b) an einer Außenumfangsseite des stationären Nockens (45b) vorhanden ist; sowie
einen beweglichen Entriegelungs-Nocken (49b), der einen beweglichen Entriegelungs-Erhebungsabschnitt (49b1) aufweist und so ausgeführt ist, dass er die beweglichen Seiten-Arretierzähne (53b) von den Seiten-Arretierzähnen (41b) der Fahrzeugkarosserie weg bewegt, indem er den beweglichen Entriegelungs-Erhebungsabschnitt (49b1) mit einem stationären Entriegelungs-Erhebungsabschnitt (45cl) des stationären Entriegelungs-Nockens (45c) in Kontakt bringt, wenn ein Kontaktzustand zwischen dem stationären Erhebungsabschnitt (45b1) und dem beweglichen Erhebungsabschnitt (47a1) durch die Drehbetätigung des Betätigungshebels (37) gelöst wird.

2. Lenksäulen-Vorrichtung nach Anspruch 1, wobei
der bewegliche Entriegelungs-Nocken (49b) einen Zylinderabschnitt (49a) enthält,
der bewegliche Nocken (47a) in das Innere des Zylinderabschnitts (49a) so eingeführt ist, dass er in der axialen Richtung bewegt werden kann, und
ein Dreh-Einschränkungsabschnitt, der so ausgeführt ist, dass er Drehung des beweglichen Nockens (47a) und des beweglichen Entriegelungs-Nockens (49b) relativ zueinander einschränkt, zwischen dem beweglichen Nocken (47a) und dem Zylinderabschnitt (49a) vorhanden ist.

3. Lenksäulenvorrichtung nach Anspruch 1 oder 2, der des Weiteren ein Drückelement umfasst, das so ausgeführt ist, dass es die beweglichen Seiten-Arretierzähne (53b) an die Seiten-Arretierzähne (41b) der Fahrzeugkarosserie drückt.

## Revendications

1. Dispositif de colonne de direction comprenant :
un support de fixation au corps de véhicule (3) fixé à un corps de véhicule et incluant des parois latérales appariées (9L, 9R) disposées à distance l'une de l'autre dans la direction de la largeur du véhicule,
une colonne de direction (13) supportée tout en pouvant bouger entre les parois latérales appariées (9L, 9R) du support de fixation au corps de véhicule (3) et incluant un arbre de direction (15), et
un mécanisme de verrouillage (39) configuré pour verrouiller la colonne de direction (13) de sorte à ce que tout mouvement de la colonne de direction (13) par rapport au support de fixation au corps de véhicule (3) soit limité, où
le mécanisme de verrouillage (39) inclut :
une partie d'arbre pénétrant dans les parois latérales appariées (9L, 9R) du support de fixation au corps de véhicule (3) et dans la colonne de direction (13) dans la direction de la largeur du véhicule,
des dents de verrouillage du côté corps de véhicule (41b) disposées sur le côté externe des parois latérales (9L, 9R) dans la direction de la largeur du véhicule,
des dents de verrouillage du côté mobile (53b) configurées pour s'engrener avec les dents de verrouillage du côté corps de véhicule (41b) en se déplaçant vers les dents de verrouillage du côté corps de véhicule (41b) dans la direction axiale de la partie d'arbre,
une came fixe (45b) située sur la partie d'arbre sur le côté externe des parois latérales (9L, 9R) dans la direction de la largeur du véhicule où sont disposées les dents de verrouillage du côté corps de véhicule (41b),
une came mobile (47a) comportant une partie saillante mobile (47a1) et configurée pour amener les parois latérales appariées (9L, 9R) à soutenir la colonne de direction (13) entre les parois latérales appariées (9L, 9R) sur la partie d'arbre en amenant la partie saillante mobile (47a1) en contact avec une partie saillante fixe (45b1) de la came fixe (45b) et en comprimant la partie saillante mobile (47a1) contre la partie saillante fixe (45b1) dans la direction axiale,
un levier de manœuvre (37) permettant une manœuvre de rotation de la came mobile (47a),
**caractérisé en ce que** le mécanisme de verrouillage (39) inclut en outre :
une came fixe de déverrouillage (45c) disposée solidairement avec la came fixe (45b) sur le côté de périphérie externe de la came fixe (45b), et
une came mobile de déverrouillage (49b) comportant une partie saillante mobile de déverrouillage (49b1) et configurée pour déplacer les dents de verrouillage du côté mobile (53b) à distance des dents de verrouillage du côté corps de véhicule (41b) en amenant la partie saillante mobile de déverrouillage (49b1) en contact avec une partie saillante fixe de déverrouillage (45c1) de la came fixe de déverrouillage (45c) lorsque le contact entre la partie saillante fixe (45b1) et la partie saillante mobile (47a1) est relâché par la manœuvre de rotation du levier de manœuvre (37).

2. Dispositif de colonne de direction selon la revendication 1, dans lequel :
la came mobile de déverrouillage (49b) inclut une partie cylindrique (49a),
la came mobile (47a) est insérée à l'intérieur de la partie cylindrique (49a) pour pouvoir se déplacer dans la direction axiale, et
une partie de limitation de rotation, configurée pour limiter la rotation de la came mobile (47a) et de la came mobile de déverrouillage (49b) l'une par rapport à l'autre, est disposée entre la came mobile (47a) et la partie cylindrique (49a).

3. Dispositif de colonne de direction selon la revendication 1 ou la revendication 2, comprenant en outre un élément de compression configuré pour comprimer les dents de verrouillage du côté mobile (53b) contre les dents de verrouillage du côté corps de véhicule (41b).
